# DEMANDE DE BREVET EUROPEEN

(11) **EP 0 792 927 A1**
(43) Date de publication de la demande: **03.09.1997**
(21) Numéro de dépôt: 97200353.7
(22) Date de dépôt: 10.02.1997
(51) Int. Cl.: C10G 1/10

(54) **Procédé de recyclage de déchets plastiques**

(30) Priorité: 29.02.1996 BE 9600175
(71) Demandeur: SOLVAY (Société Anonyme), B-1050 Bruxelles (BE)
(72) Inventeur: Bauer, Siegfried, 82166 Graefelfing (DE)
(74) Mandataire: Dufrasne, Eugène

(57) **Abrégé**

L'invention concerne un procédé de recyclage de déchets essentiellement constitués d'une ou plusieurs matières plastiques comprenant du polychlorure de vinyle (PVC), dans lequel :
- on mélange les déchets à une huile lourde, dans un réacteur sous atmosphère inerte, à une température interne d'au moins 300°C et on recueille le chlorure d'hydrogène (HCl) qui se dégage ;
- on craque ensuite le contenu du réacteur, à une température d'au moins 400°C, et on extrait du réacteur au moins une partie des gaz qui se dégagent ;
- on refroidit ensuite le contenu du réacteur et on recueille le produit solide résiduel.
On obtient ainsi principalement de l'HCl, du coke, des gaz hydrocarbonés et diverses huiles.

## Description

La présente invention concerne le recyclage de déchets de matières plastiques, en particulier de déchets riches en polychlorure de vinyle (PVC).

Etant donné la très large utilisation des matières plastiques dans la fabrication d'articles de grande consommation tels qu'emballages, bouteilles, etc., le recyclage des matières plastiques est à l'heure actuelle d'une grande importance, à la fois sur les plans industriel et de l'environnement. La forme la plus élémentaire de recyclage est bien entendu la réutilisation pure et simple des articles usagés, après des opérations de reconditionnement élémentaires tels que le lavage. Toutefois, de nombreux articles à base de matière plastique ne peuvent pas être réutilisés, par exemple en raison de risques de pollution dans le cas d'articles destinés à l'emballage alimentaire, ou encore pour des raisons de résistance mécanique.

Une autre forme de recyclage consiste à réduire les articles usagés en particules de faibles dimensions, par exemple par broyage, et à les remettre en oeuvre de la même façon que la matière vierge, par exemple par extrusion ou par injection, éventuellement en mélange avec une certaine quantité de matière vierge. Toutefois, cette méthode de recyclage peut conduire à de mauvais résultats lorsque les articles recyclés ne sont pas d'une même nature, sont souillés, comprennent des additifs différents, comportent des étiquettes, etc. Des étapes préalables de séparation, souvent difficiles à automatiser, sont alors généralement nécessaires.

Cette méthode peut également, dans certains cas, provoquer une légère dégradation des polymères ainsi traités, sous l'effet de la chaleur. En particulier, si les déchets ainsi traités comprennent du PVC, il se peut que du chlorure d'hydrogène (HCl) se dégage si les conditions de mise en oeuvre ne sont pas judicieusement choisies et contrôlées.

Une solution ultime est le recyclage thermique, qui consiste simplement à incinérer les matières plastiques en vue d'en récupérer le contenu énergétique. Cette solution a cependant pour inconvénient la dégradation totale des matières plastiques, sans récupération d'aucune matière première, et nécessite des installations coûteuses, en particulier en ce qui concerne le traitement des fumées.

C'est pourquoi on a également développé des méthodes intermédiaires de recyclage, qui, tout en impliquant une dégradation partielle des matières plastiques traitées, permettent cependant la récupération d'une ou plusieurs matières premières réutilisables, par exemple d'HCl et de produits hydrocarbonés liquides, solides et/ou gazeux ("feedstock recycling").

Ainsi, par exemple, dans le document DE-A-3616785, des déchets organiques liquides et/ou solides divers, pouvant comprendre des matières plastiques, sont pyrolysés à haute température, en lit fluidisé, dans une atmosphère contenant de l'hydrogène. L'utilisation d'hydrogène présente cependant, outre les contraintes qu'elle impose, des risques importants sur la plan de la sécurité.

Selon le document GB-A-2158089, on pyrolyse des matières plastiques de récupération dans un premier réacteur, optionnellement en présence d'une faible quantité d'huile lourde (10 % du poids des matières plastiques), à des températures suffisantes pour provoquer leur vaporisation complète (500°C). Les gaz ainsi obtenus sont conduits dans un second réacteur où ils subissent un craquage à 500-600°C. L'atmosphère présente dans chacun des deux réacteurs contient de préférence de l'oxygène, afin de provoquer une combustion in situ au moins partielle en vue de réduire les apports extérieurs de chaleur. La mise en oeuvre de deux réacteurs requiert cependant des installations complexes et coûteuses, et l'utilisation de températures de l'ordre de 600°C conduit à une consommation énergétique élevée.

Dans ces procédés connus, qui ne concernent pas spécifiquement le recyclage de déchets plastiques riches en PVC, l'HCl qui se dégage est généralement considéré comme un sous-produit gênant, car il s'agit d'un produit corrosif qu'il faut veiller à ne pas laisser s'échapper librement ; il est donc généralement neutralisé (par exemple transformé en sel). Toutefois, il s'agit d'un produit chimique de base pouvant avantageusement être récupéré et réutilisé, en particulier dans divers procédés de synthèse. Un tel recyclage est plus rationnel et plus rentable qu'une simple neutralisation.

Enfin, dans les procédés connus susmentionnés, aucun détail n'est fourni quant aux systèmes d'introduction des déchets dans le réacteur, alors que cette introduction présente plusieurs problèmes, tel celui des fuites de gaz vers l'extérieur, en particulier si le procédé se déroule sous pression.

La présente invention vise dès lors à fournir un procédé de recyclage de matières plastiques qui soit simple à mettre en oeuvre, puisse être appliqué à une large variété de matières plastiques, en particulier riches en PVC, et qui permette de récupérer un maximum de produits réutilisables. En particulier, l'un des objectifs de ce procédé est de permettre de transformer une proportion élevée des matières plastiques en un produit solide à faible teneur en chlore.

De manière plus précise, l'invention concerne un procédé de recyclage de déchets essentiellement constitués d'une ou plusieurs matières plastiques comprenant du polychlorure de vinyle (PVC), dans lequel :
(a) on mélange les déchets à une huile lourde, dans un réacteur sous atmosphère inerte, à une température interne d'au moins 300 °C, et on recueille le chlorure d'hydrogène (HCl) qui se dégage ;
(b) on craque ensuite le contenu du réacteur, à une température d'au moins 400°C, et on extrait du réacteur au moins une partie des gaz qui se dégagent ;
(c) on refroidit ensuite le contenu du réacteur et on recueille le produit solide résiduel.

La plupart des étapes du procédé se déroulent dans un récipient fermé, qualifié de réacteur, qui présente une résistance mécanique et chimique adéquate. Il est équipé de moyens de chauffage, et optionnellement de moyens de refroidissement, ainsi que de dispositifs permettant l'introduction des déchets de matières plastiques et la collecte des produits solides, liquides et/ou gazeux formés. Il est de préférence muni de moyens d'agitation, par exemple d'une ou plusieurs hélices entraînées par un ou plusieurs moteurs extérieurs.

La pression régnant à l'intérieur du réacteur est généralement au moins égale à la pression atmosphérique; elle lui est de préférence approximativement égale.

Bien que la description qui précède du procédé de l'invention se rapporte à une conduite de type discontinu (batch), ce procédé peut également se réaliser en continu, moyennant quelques adaptations évidentes pour l'homme du métier.

Pour mettre en oeuvre le procédé décrit ci-dessus de façon continue, une possibilité consiste notamment à utiliser un réacteur de forme allongée, comportant plusieurs zones portées à des températures différentes, le contenu du réacteur passant d'une zone à l'autre, par exemple sous l'effet d'une vis d'Archimède ou d'un autre dispositif de déplacement adéquat.

Outre du PVC, les déchets peuvent comprendre une ou plusieurs matières plastiques de différentes natures. Le procédé donne des résultats particulièrement avantageux lorsqu'on l'applique à des matières plastiques essentiellement constituées de matières thermoplastiques (par exemple des polyoléfines, du polystyrène, du polyéthylène téréphtalate ou des polymères du chlorure de vinyle), et en particulier à des déchets qui comprennent au moins 50 % en masse de PVC. L'un des avantages du procédé de l'invention, que ne présentent pas les procédés connus à ce jour, est qu'aucune limite supérieure ne doit être imposée à la teneur en PVC des déchets.

L'indication selon laquelle les déchets sont "essentiellement constitués" de matière(s) plastique(s) signifie que les déchets peuvent en outre contenir une faible proportion de déchets de nature différente, par exemple des débris d'étiquettes ou des souillures. La présence de tels constituants, bien qu'indésirable, est généralement inévitable. En cas de besoin, on peut prévoir une étape préalable de tri visant à réduire la proportion de tels constituants dans les déchets.

Avantageusement, les dimensions des déchets sont préalablement réduites, par exemple par broyage et/ou par fusion. Le broyage des déchets peut s'effectuer dans tout dispositif classique connu à cette fin, tel que déchiqueteuse à couteaux, broyeur, etc. De préférence, on utilise un dispositif permettant d'obtenir des particules d'une taille moyenne de l'ordre de 1 à 20 mm. Une fois broyés, les déchets sont introduits dans le réacteur par tout dispositif conventionnel, par exemple au moyen d'un doseur volumétrique refroidi (afin de réduire les risques de collage). Dans le cas d'une introduction directe des déchets à l'état solide, il est souhaitable que les dispositifs d'introduction comportent des moyens d'étanchéité réduisant au minimum les fuites vers l'extérieur des gaz contenus dans le réacteur, surtout lorsque le procédé se déroule sous pression.

La fusion des déchets peut être réalisée au moyen de tout dispositif de fusion connu, tel que malaxeur, extrudeuse, etc. installé à proximité du réacteur et raccordé à celui-ci. Selon une variante particulièrement avantageuse, les déchets sont initialement fondus et introduits dans le réacteur au moyen d'une extrudeuse. La filière de l'extrudeuse est de préférence située, dans le réacteur, plus bas que le niveau de l'huile. Si nécessaire, il pourra être utile de préalablement réduire les dimensions des déchets, par exemple par broyage comme décrit ci-dessus, avant de les introduire dans l'extrudeuse.

Dans le cas où une extrudeuse est utilisée, il est aisé d'introduire les déchets dans le réacteur sans risquer de provoquer de fuites des gaz formés au cours du déroulement du procédé, même si celui-ci a lieu sous pression.

Un avantage particulier lié à l'introduction des déchets à l'état fondu est que la puissance de chauffage du réacteur peut être réduite par rapport à une introduction à l'état solide. Inversement, à puissance de chauffage égale, la durée totale du procédé est réduite. Un autre avantage d'un tel mode d'introduction est que le risque d'une agglomération de particules imparfaitement fondues au fond du réacteur ou sur ses parois est significativement réduit, en raison de l'état déjà fondu des déchets introduits dans le réacteur.

Lorsque les déchets sont introduits dans le réacteur à l'état fondu, en particulier au moyen d'une extrudeuse, ils se trouvent avantageusement à une température de l'ordre de 180 à 220°C, de manière à éviter toute déshydrochloration substantielle de PVC hors du réacteur, et en particulier dans l'extrudeuse. Si cette température ne permet pas la fusion de certaines particules de déchets de matières plastiques, présentant une température de fusion plus élevée, cela ne nuit pas au bon déroulement du procédé, pour autant qu'il n'en résulte pas un blocage ou une destruction du dispositif de fusion. Si de tels problèmes se présentent, on envisagera avantageusement de recourir à l'introduction directe des déchets dans le réacteur, à l'état solide, ou prévoir une étape préalable de tri afin de limiter la teneur des déchets en telles particules à température de fusion élevée, ou encore réduire davantage la granulométrie des particules de déchets.

L'huile lourde à laquelle sont mélangés les déchets est d'un type bien connu par ailleurs ; elle est par exemple constituée d'un résidu de la distillation sous vide du pétrole (VCR - vacuum cracked residue) se présentant sous la forme d'un goudron solide ou pâteux à la température ambiante mais relativement fluide à partir de 150 à 200°C. Sa température de distillation est généralement d'au moins 400°C, et de préférence d'au moins 450 °C. Ce type de résidu est généralement d'un faible coût et apte à la cokéfaction. On peut aussi bien utiliser une seule huile qu'un mélange de plusieurs huiles.

La proportion des déchets par rapport à l'huile lourde n'est pas critique. Il est toutefois évident qu'une proportion de déchets trop faible ne permet pas une exploitation rentable et qu'une proportion de déchets trop élevée risque de conduire à la formation d'un mélange extrêmement épais et visqueux qui pourrait perturber le fonctionnement de l'éventuel dispositif d'agitation du réacteur et ralentir le déroulement du procédé. De bons résultats ont été obtenus lorsque le rapport du poids de déchets au volume d'huile lourde (avant introduction desdits déchets) était de 0,15 à 1,2 kg/l. De préférence, ce rapport est d'au moins 0,5 kg/l. Avantageusement, ce rapport n'excède par ailleurs pas 1 kg/l.

Un autre avantage du procédé de l'invention est qu'il permet de recycler simultanément des déchets de matière plastique et des produits hydrocarbonés tels que des huiles. De manière surprenante, l'addition de PVC à des déchets hydrocarbonés de ce type accroît fortement leur aptitude à la cokéfaction.

Outre l'huile lourde et les déchets, le réacteur contient une atmosphère inerte, c'est-à-dire une atmosphère dans laquelle la quantité de gaz réactifs tels que l'oxygène est aussi faible que possible (de préférence inférieure à 1 % en volume). Les gaz inertes bien connus peuvent être utilisés dans le cadre de la présente invention, par exemple l'azote (N₂), le CO₂, le CO, etc. Au fur et à mesure du déroulement du procédé, cette atmosphère s'enrichit naturellement de gaz tels que l'HCl et/ou des gaz hydrocarbonés, ce qui ne nuit en aucune façon au déroulement du procédé.

Durant l'étape (a), la température interne est avantageusement d'au moins 350°C, de préférence d'au moins 380°C. La température interne est généralement d'au plus 450°C, et de préférence d'au plus 430°C. Avantageusement, l'huile lourde est introduite dans le réacteur et portée à la température voulue avant le début de l'introduction des déchets dans le réacteur.

Le contenu du réacteur est de préférence soumis à une agitation forcée. La durée de l'étape d'introduction des déchets dans le réacteur est avantageusement de l'ordre de 30 à 60 minutes, indépendamment du volume de déchets à traiter. Au fur et à mesure du mélange des déchets à l'huile lourde dans le réacteur, l'HCl provenant du PVC se dégage rapidement (déshydrochloration). Ce gaz est de préférence extrait du réacteur, et on peut ensuite éventuellement le purifier en vue d'une réutilisation ultérieure.

Lorsque la totalité des déchets à traiter ont été introduits et que leur déshydrochloration est quasiment terminée, on craque le contenu du réacteur, de préférence en élevant sa température. L'augmentation de température est avantageusement de 20 à 100°C par rapport à la température interne à la fin de l'étape (a) ; elle est de préférence d'au moins 50°C, et tout particulièrement d'au moins 80°C. Le fait de procéder à la déshydrochloration du contenu du réacteur à une température inférieure à la température du craquage permet en effet de réduire les risques de "pollution" de l'HCl recueilli lors de la déshydrochloration par des gaz hydrocarbonés. De préférence, la température interne pendant le craquage est d'au moins 450°C. Avantageusement, elle ne dépasse pas 500°C.

La durée du craquage est adaptée de manière usuelle au volume du contenu du réacteur ainsi qu'à la température du craquage ; elle est typiquement d'au moins 30 minutes, de préférence d'au moins une heure. Elle est généralement inférieure à 5 heures, et de préférence inférieure à 2 heures.

Ce craquage provoque le dégagement de différents produits gazeux, essentiellement hydrocarbonés, dont on extrait au moins une partie du réacteur et que l'on peut éventuellement réutiliser. Avantageusement, l'extraction de gaz du réacteur se fait d'une façon telle que la pression y reste stable, en particulier voisine de la pression atmosphérique. Les gaz extraits du réacteur peuvent avantageusement être débarrassés des traces d'HCl qu'ils pourraient encore contenir, notamment par neutralisation ou, de préférence, par récupération (par exemple par barbotage dans de l'eau).

Avant ou après l'éventuelle élimination de l'HCl qu'ils peuvent contenir, les gaz extraits du réacteur sont généralement refroidis, éventuellement en plusieurs étapes. Habituellement, ce refroidissement provoque la condensation d'une partie de ces gaz sous la forme de fractions liquide et/ou bitumineuse, alors qu'une autre partie de ces gaz ne se condense pas.

Le refroidissement des gaz extraits du réacteur ainsi que la séparation des fractions liquide et/ou bitumineuse condensées peut s'effectuer par tout moyen connu à cet effet, notamment à l'aide d'un cyclone ou de tout dispositif équivalent, typiquement maintenu à une température d'environ 200 à 300°C. Un cyclone offre l'avantage de permettre la séparation des éventuelles particules entraînées par les gaz. Les gaz non-condensés ainsi recueillis peuvent être ensuite soumis à un refroidissement plus énergique, typiquement à des températures de 0 à 25 °C, par exemple dans un condenseur, ce qui permet de recueillir une fraction liquide huileuse, qui pourra éventuellement être soumise à une distillation fractionnée. La fraction gazeuse qui n'a toujours pas été condensée lors de ce refroidissement énergique peut être renvoyée dans le réacteur, ou encore brûlée pour contribuer à son chauffage. Selon une variante avantageuse, on renvoie dans le réacteur l'éventuelle fraction gazeuse non-condensée recueillie lors de la condensation des gaz extraits du réacteur lors du craquage de son contenu (recirculation). Ces gaz non-condensés jouent alors un rôle comparable à celui du gaz inerte présent dans le réacteur.

Une fois que le craquage est substantiellement terminé, ce qui se constate au fait que le dégagement gazeux se réduit notablement, on laisse le contenu du réacteur se refroidir, par exemple jusqu'à la température ambiante, optionnellement à l'aide d'un refroidissement forcé.

On peut alors extraire le résidu que contient le réacteur, qui est généralement substantiellement solide et essentiellement constitué de coke, en vue de le réutiliser, par exemple comme combustible, après un broyage éventuel. Dans certains cas, en vue de faciliter cette extraction, on peut également y procéder lorsque la température du contenu du réacteur est encore élevée, par exemple de 200°C. Les conditions opératoires susmentionnées permettent d'obtenir un coke présentant une très faible teneur en chlore, ce qui est particulièrement avantageux en vue de sa réutilisation, par exemple comme combustible.

Bien que l'usage d'un catalyseur lors du craquage ne soit pas exclu, selon une variante avantageuse du procédé aucun catalyseur n'est ajouté dans le réacteur, ce qui simplifie la mise en oeuvre du procédé et le rend particulièrement simple et économique.

### Exemples

Les exemples suivants illustrent de façon non limitative le fonctionnement et les avantages du procédé de l'invention. Les exemples 1, 3, 4 et 5 sont conformes à l'invention, et l'exemple 2R est donné à titre de comparaison.

### Exemple 1

1 kg de déchets de matières plastiques, constitués de PVC provenant de bouteilles d'eau minérale, préalablement réduits en particules d'une taille de l'ordre de 0,5 à 1 cm au moyen d'une déchiqueteuse à couteaux, sont introduits dans une extrudeuse à vis unique dont le pied de la trémie est refroidi. Ces déchets sont progressivement injectés, à l'état fondu, à une température de 180 °C, dans un réacteur fermé d'un volume approximatif de 4 l. Ce réacteur a préalablement été rempli d'1 kg d'une huile lourde (vacuum cracked residue oil - VCR) (rapport déchets/huile d'environ 1 kg/l), et qui a été chauffée à une température d'environ 400 °C, sous agitation forcée (60 rpm) et sous un balayage permanent d'azote (environ 600 l/h), sous pression atmosphérique. A la fin de l'introduction, l'extrudeuse est purgée avec 0,1 à 0,2 kg de polyéthylène de haute densité.

Les déchets introduits dans le réacteur se dissolvent dans l'huile et commencent immédiatement à se décomposer, avec en particulier un important dégagement d'HCl. Après 1 heure environ, la totalité des déchets a été introduite dans le réacteur. La température interne, qui avait été maintenue entre 370 et 410 °C au cours de l'introduction des déchets, est alors portée à environ 440 °C, ce qui provoque le craquage du matériau visqueux présent dans le réacteur : environ 25 % en poids de ce matériau se gazéifie, et est conduit à un cyclone maintenu à environ 250 °C. Les fractions bitumineuse et/ou liquide condensées dans le cyclone sont renvoyées dans le réacteur. La fraction gazeuse qui n'est pas condensée dans le cyclone est refroidie énergiquement (20 °C) au moyen d'un condenseur F, ce qui permet de recueillir un liquide brun foncé que l'on stocke dans un réservoir R2. Les gaz qui n'ont pas été condensés dans le condenseur sont purifiés et stockés. En particulier, les traces d'HCl résiduel que contiennent ces gaz sont neutralisées par leur passage dans des barboteurs remplis d'une solution aqueuse d'hydroxyde de sodium. Après 1 heure, le craquage est substantiellement terminé, et on laisse le réacteur et son contenu se refroidir, environ jusqu'à la température ambiante. Il subsiste dans le réacteur un résidu sombre, de faible densité a poreux (coke), que l'on broie après l'avoir extrait du réacteur et que l'on pourra éventuellement réutiliser comme combustible solide.

Le liquide que l'on a stocké dans le réservoir R2 est ensuite distillé sous pression réduite (20 mm de mercure) dans une colonne de distillation, ce qui fournit deux fractions : entre 20 et 200°C, le produit a les propriétés d'une huile légère, et entre 200 et 320°C, il a les propriétés d'une huile diesel. Ces deux fractions sont refroidies et stockées.

Pendant la première heure (étape d'introduction des déchets), la fraction gazeuse quittant le condenseur F contient environ 98 % d'HCl et 2 % de gaz hydrocarbonés légers. Cet HCl peut être purifié et réutilisé. Pendant la seconde heure, la fraction gazeuse quittant le condenseur contient environ 98 % d'un mélange de CO, d'hydrogène et de gaz hydrocarbonés légers, le reste étant constitué d'HCl. Cette fraction gazeuse est conduite à un dispositif de lavage de gaz à eau contenant de la soude caustique 2N, afin de neutraliser l'HCl, et peut ensuite être utilisée comme gaz combustible.

Les quantités des différents produits recueillis, exprimées en kg, sont indiquées dans le tableau ci-dessous (Ex. 1).

### Exemple 2R

A titre de comparaison, on a appliqué la procédure décrite ci-dessus à 2 kg de la même huile lourde, en l'absence de déchets de matière plastique.

| | Ex. 1 (PVC + huile lourde) | Ex. 2R (huile lourde seule) |
|---|---|---|
| coke | 0,70 | 0,50 |
| HCl | 0,45 | - |
| huile légère | 0,24 | 0,50 |
| huile diesel | 0,36 | 0,64 |
| gaz | 0,10 | 0,10 |
| cires | 0,10 | 0,18 |
| pertes | 0,05 | 0,08 |
| Total | 2,00 | 2,00 |

### Exemples 3 et 4 : Traitement de mélanges de PVC avec d'autres matières plastiques

Selon l'exemple 3, 0,5 kg d'un mélange de déchets de PVC et de polystyrène (PS) (dans un rapport pondéral 75/25) finement broyés sont, grâce à une extrudeuse, fondus à 190°C et introduits dans un réacteur agité contenant 1,31 kg d'huile lourde préchauffée à 400°C (rapport 0,39 kg/l), sous atmosphère inerte (N₂). On applique le même mode opératoire que dans les exemples 1 et 2R. Les produits recueillis sont indiqués dans le tableau ci-dessous.

Selon l'exemple 4, 0,5 kg d'un mélange de déchets de PVC et de polyéthylène-téréphtalate (PET) (dans un rapport pondéral 75/25) finement broyés sont également introduits, à 190°C, au moyen d'une extrudeuse, dans un réacteur agité contenant 1,40 kg d'huile lourde préchauffée à 400°C (rapport 0,36 kg/l), sous atmosphère inerte (N₂). On applique le même mode opératoire que dans l'exemple 3. Les produits recueillis sont indiqués dans le tableau ci-dessous.

La teneur en chlore du coke est très faible, typiquement ≤ 0,5 g/kg, et est principalement attribuée au stabilisant thermique contenu dans le PVC. La teneur en chlore des fractions huileuses est typiquement inférieure à 3 g/kg, et est principalement attribuée aux composés organochlorés aliphatiques formés pendant le craquage. La teneur en chlore dans la fraction de gaz hydrocarbonés est typiquement ≤ 2 % en volume, essentiellement de l'HCl, avec des traces de chlorure de méthyle. Après traitement à la soude caustique, la teneur en chlore des gaz hydrocarbonés est inférieure à 20 ppm.

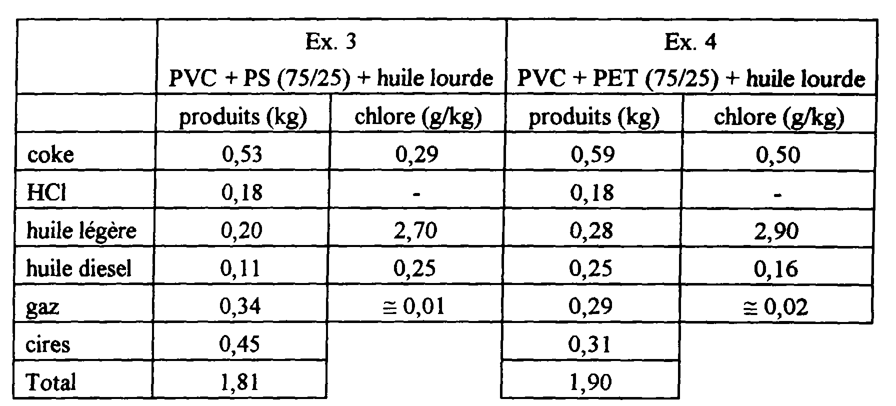

On constate que la teneur en chlore du coke est très faible.

### Exemple 5

En appliquant un mode opératoire semblable à celui des exemples 3 et 4, à la différence près qu'un doseur volumétrique refroidi a été utilisé pour l'introduction des déchets, on a traité un mélange de 0,5 kg de déchets de PVC et de 1,59 kg d'huile lourde (rapport du poids de déchets au volume d'huile ≈ 0,32 kg/l). En tenant compte des différents additifs qu'il comprenait, le PVC était susceptible de libérer environ 250 g d'HCl. En raison des résultats de l'exemple 2R, on pouvait par ailleurs s'attendre à ce que les 1590 g d'huile lourde conduisent à la formation de 0,25 x 1590 = 397,5 g de coke. La quantité totale de coke obtenue aurait donc dû être théoriquement de 250 + 397,5 = 647,5 g. Toutefois, de manière surprenante, on a recueilli après traitement 1030 g de résidu solide (coke), soit 48 % de plus que prévu théoriquement, ce qui démontre la présence d'un effet synergique.

## Revendications

1. Procédé de recyclage de déchets essentiellement constitués d'une ou plusieurs matières plastiques comprenant du polychlorure de vinyle (PVC), dans lequel :
(a) on mélange les déchets à une huile lourde, dans un réacteur sous atmosphère inerte, à une température interne d'au moins 300 °C, et on recueille le chlorure d'hydrogène (HCl) qui se dégage ;
(b) on craque ensuite le contenu du réacteur, à une température d'au moins 400°C, et on extrait du réacteur au moins une partie des gaz qui se dégagent ;
(c) on refroidit ensuite le contenu du réacteur et on recueille le produit solide résiduel.

2. Procédé selon la revendication 1 dans lequel les dechets comprennent au moins 50 % en masse de PVC.

3. Procédé selon l'une des revendications précédentes, dans lequel les déchets sont initialement fondus et introduits dans le réacteur au moyen d'une extrudeuse.

4. Procédé selon l'une des revendications précédentes, dans lequel le rapport du poids de déchets au volume d'huile lourde est de 0,15 à 1,2 kg/l.

5. Procédé selon la revendication 4, dans lequel le rapport du poids de déchets au volume d'huile lourde est de 0,5 à 1 kg/l.

6. Procédé selon l'une des revendications précédentes, dans lequel, durant l'étape (a), la température interne est de 350 à 450°C.

7. Procédé selon l'une des revendications précédentes, dans lequel on craque le contenu du réacteur en élevant sa température de 20 à 100°C par rapport à la température interne à la fin de l'étape (a).

8. Procédé selon l'une des revendications précédentes, dans lequel on renvoie dans le réacteur l'éventuelle fraction gazeuse non-condensée recueillie lors de la condensation des gaz extraits du réacteur lors du craquage de son contenu.

9. Procédé selon l'une des revendications précédentes, dans lequel aucun catalyseur n'est ajouté dans le réacteur.
